# EUROPEAN PATENT APPLICATION

(11) **EP 2 330 297 A1**
(43) Date of publication of application: **08.06.2011**
(21) Application number: 09817423.8
(22) Date of filing: 24.09.2009
(51) Int. Cl.: F03D 7/04, F03D 11/00, F16H 1/32

(54) **PITCH DRIVE DEVICE FOR WIND WHEEL**

(30) Priority: 03.10.2008 JP 2008258986
(71) Applicant: Nabtesco Corporation, Tokyo 105-0022 (JP)
(72) Inventor: KODAMA, Haruo, Fuwa-gun Gifu 503-2121 (JP)
(74) Representative: Barth, Stephan Manuel
(86) International application number: PCT/JP2009/004802
(87) International publication number: WO 2010/038380

(57) **Abstract**

A windmill pitch driving apparatus is provided, which is capable of achieving improved output torque and reduced size as well as reduced weight. Lubricating oil is enclosed in a casing 11 such that crankshaft bearings 27 and external tooth bearings 28 are immersed in the lubricating oil during a single rotation of a main shaft portion 104. With an electric motor 108 located on the upper side and an axis P of an output shaft 15 corresponding to the vertical direction, an oil level 40 of the lubricating oil enclosed in the casing 11 is below the level of a seal member 19a and such that at least part of a driving force transmission path from an input shaft 13 to crankshafts 21 is exposed to the air enclosed in the casing 11.

## Description

### Technical Field

The present invention relates to a windmill pitch driving apparatus that can be provided in a windmill and used as a driving apparatus for controlling the pitch angle of a blade that is rotatably provided on a main shaft portion of the windmill.

### Background Art

Windmills may be provided with a windmill pitch driving apparatus that is used as a driving apparatus for controlling the pitch angle of a blade that is rotationally provided on the main shaft portion of the windmill. With recent trends such as increased power generating capacities of windmills and increased blade diameters, a situation has arisen where there is a demand for a windmill pitch driving apparatus with high-output specifications having improved output torque. Meanwhile, windmill pitch driving apparatuses are also required to have a smaller configuration because there is only limited space in a windmill for installing the windmill pitch driving apparatuses.

In view of this, an eccentric speed reducer for yaw drive for causing the nacelle of a windmill to turn around, as disclosed in PTL 1, is known as an example of a speed reducer capable of achieving a high speed reduction ratio, which is necessary to improve output torque and reduce size. In the speed reducer disclosed in PTL 1, an input shaft (62) that receives the driving force of an electric motor extends through an upper cover (14), and an oil seal (50) is disposed between the input shaft and the upper cover. The upper cover has a bulging portion (71) formed by part of the upper cover bulging upward, and with this configuration, the oil level of lubricating oil enclosed in the casing is raised to this bulging portion so as to be above the level of the oil seal.

### Citation List

### Patent Literature

PTL 1: JP 2003-83400A

### Disclosure of Invention

### Problem to be Solved by the Invention

The application of the speed reducer disclosed in PTL 1 as a windmill pitch driving apparatus is considered in order to improve the output torque of the windmill pitch driving apparatus as well as to reduce the size thereof. However, the speed reducer disclosed in PTL 1 is configured such that the level of the lubricating oil in the casing is above the level of the oil seal disposed between the upper cover and the input shaft, and therefore a large amount of lubricating oil is enclosed in the casing. The use of the speed reducer disclosed in PTL 1 as a windmill pitch driving apparatus thus has the problem that the weight of the windmill pitch driving apparatus is caused to increase. In addition, in the case of the speed reducer disclosed in PTL 1, there is the problem that the upper cover provided with the bulging portion formed so as to bulge upward causes an increase in the axial dimension (the dimension in the axial direction of the output shaft), which is disadvantageous to size reduction.

In view of the foregoing circumstances, it is an object of the present invention to provide a windmill pitch driving apparatus that is capable of achieving improved output torque and reduced size as well as reduced weight.

### Means for Solving Problem

In order to achieve the above-described object, a windmill pitch driving apparatus according to a first invention is provided in a windmill and used as a driving apparatus for controlling a pitch angle of a blade that is rotatably provided on a main shaft portion of the windmill, and includes a casing, a cover fixed to the casing so as to cover an opening at an end of the casing, an electric motor being attachable to the cover, a plurality of internal tooth pins disposed on an inner circumference of the casing and formed as pin-shaped members, an external tooth gear housed in the casing and provided with external teeth formed on its outer circumference that mesh with the internal tooth pins, an input shaft extending through the cover and configured to receive a driving force of the motor, a seal member disposed between the cover and the input shaft, a crankshaft extending through a crank hole formed in the external tooth gear, and configured to rotate with the driving force transmitted from the input shaft so as to let the external tooth gear rotate eccentrically, a base carrier holding the crankshaft on one end side, an end carrier holding the crankshaft on the other end side, a strut disposed between the base carrier and the end carrier so as to provide a connection between the base carrier and the end carrier, an output shaft fixed to the base carrier and provided with a pinion, a pair of crankshaft bearings, one of which rotatably holds the crankshaft on the one end side with respect to the base carrier and the other of which rotatably holds the crankshaft on the other end side with respect to the end carrier, and an external tooth bearing disposed in the crank hole and rotatably holding the crankshaft with respect to the external tooth gear, wherein lubricating oil is enclosed in the casing such that the crankshaft bearings and the external tooth bearing are immersed in the lubricating oil during a single rotation of the main shaft portion, and in a state in which the motor is located on the upper side and an axis of the output shaft corresponds to a vertical direction, an oil level of the lubricating oil enclosed in the casing is below the level of the seal member and such that at least part of a driving force transmission path from the input shaft to the crankshaft is exposed to air enclosed in the casing.

According to this invention, the windmill pitch driving apparatus is configured as an eccentric speed reducer provided with the external tooth gears, which rotate eccentrically. Accordingly, a high speed reduction ratio is ensured, and improved output torque is achieved. The windmill pitch driving apparatus, which is configured as an eccentric speed reducer, is capable of achieving a high speed reduction ratio with a small configuration. Furthermore, in the windmill pitch driving apparatus according to the present invention, lubrication of the bearings in the casing is ensured, because the lubricating oil is enclosed in the casing such that the crankshaft bearings and the external tooth bearings are immersed in the lubricating oil during a single rotation of the main shaft portion of the windmill. With this windmill pitch driving apparatus in a vertical orientation in which the motor is located on the upper side and the axis of the output shaft is oriented in the vertical direction, the oil level of the lubricating oil in the casing is below the level of the seal member disposed between the cover and the input shaft and such that at least part of the driving force transmission path is exposed to the air in the casing. Accordingly, with effective use of the properties of the windmill pitch driving apparatus, the amount of the lubricating oil in the casing can be reduced while ensuring lubrication of the bearings in the casing, and as a result, the weight of the windmill pitch driving apparatus can be reduced. Furthermore, since the oil level of the lubricating oil is below the level of the seal member with the windmill pitch driving apparatus in the aforementioned vertical orientation, the cover does not need to partly bulge outward greatly as in the speed reducer disclosed in PTL 1, and accordingly an increase in the axial dimension, which is a disadvantage to downsizing, can be suppressed.

It is thus possible according to this invention to provide a windmill pitch driving apparatus that is capable of achieving improved output torque and reduced size as well as reduced weight.

A windmill pitch driving apparatus according to a second invention is the windmill pitch driving apparatus according to the first invention, which further includes a crank driving gear fixed to the crankshaft on the other end side and configured to receive the driving force transmitted from the input shaft, wherein the lubricating oil is enclosed in the casing such that in a state in which the motor is located on the upper side and the axis of the output shaft corresponds to the vertical direction, the oil level of the lubricating oil enclosed in the casing is below the level of the underside of the crank driving gear.

According to this invention, the windmill pitch driving apparatus is configured such that, in its aforementioned vertical orientation, the oil level of the lubricating oil in the casing is below the level of the underside of the crank driving gear. Accordingly, with the windmill pitch driving apparatus in the aforementioned vertical orientation, there is a sufficient volume of stored air above the crank driving gear. This suppresses an increase in pressure in the windmill pitch driving apparatus and suppresses leakage of the lubricating oil in the casing to the outside. Furthermore, it is possible with the above-described configuration to readily achieve a configuration in which a sufficient volume of stored air is ensured, and therefore the axial distance between the crank driving gear and the cover can be further shortened. This allows a further reduction in the axial dimension of the windmill pitch driving apparatus (that is, the axis of the windmill pitch driving apparatus can be shortened).

### Effects of the Invention

According to the present invention, it is possible to provide a windmill pitch driving apparatus that is capable of achieving improved output torque and reduced size as well as reduced weight.

### Brief Description of Drawings

[FIG. 1] FIG. 1 is a perspective view showing a windmill to which a windmill pitch driving apparatus according to an embodiment of the present invention is applied.
[FIG. 2] FIG. 2 is a cross-sectional view showing, in an enlarged scale, a portion where a blade is attached to the hub of the windmill shown in FIG. 1.
[FIG. 3] FIG. 3 is a cross-sectional view showing a windmill pitch driving apparatus according to an embodiment of the present invention.
[FIG. 4] FIG. 4 is a cross-sectional view showing, in an enlarged scale, a speed reduction portion and its vicinity of the windmill pitch driving apparatus shown in FIG. 3.

### Description of the Invention

The following is a description of an embodiment for carrying out the present invention with reference to the drawings. An embodiment of the present invention is widely applicable as a windmill pitch driving apparatus that can be provided in a windmill and used as a driving apparatus for controlling the pitch angle of a blade that is rotatably provided on a main shaft portion of the windmill.

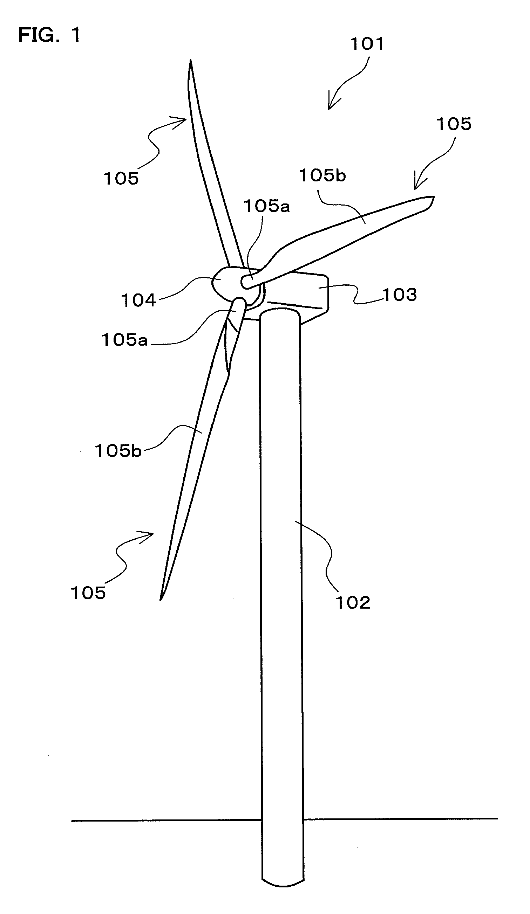

FIG. 1 is a perspective view of a windmill 101 to which a windmill pitch driving apparatus 1 (hereinafter, simply referred to as a "pitch driving apparatus 1") according to an embodiment of the present invention is applied. As shown in FIG. 1, the windmill 101 includes, a tower 102, a nacelle 103, a hub (main shaft portion) 104, blades 105, and so forth. The tower 102 is installed so as to extend vertically upward from the ground. The nacelle 103 is rotatably disposed on the tower 102, such that it can be turned around in a horizontal plane by a yaw driving apparatus, which is not shown. A power transmission shaft, an electric power generator, and so on, not shown, are disposed inside the nacelle 103. The hub 104, which constitutes a main shaft portion in the present embodiment, is coupled to the aforementioned power transmission shaft and rotatably provided on the nacelle 103. Multiple (three, in the present embodiment) blades 105 are attached to the hub 104 so as to extend radially at equal angle intervals. Each blade 105 is configured by a hollow cylindrical shaft portion 105a that is attached to the hub 104, and a blade portion 105b for receiving wind.

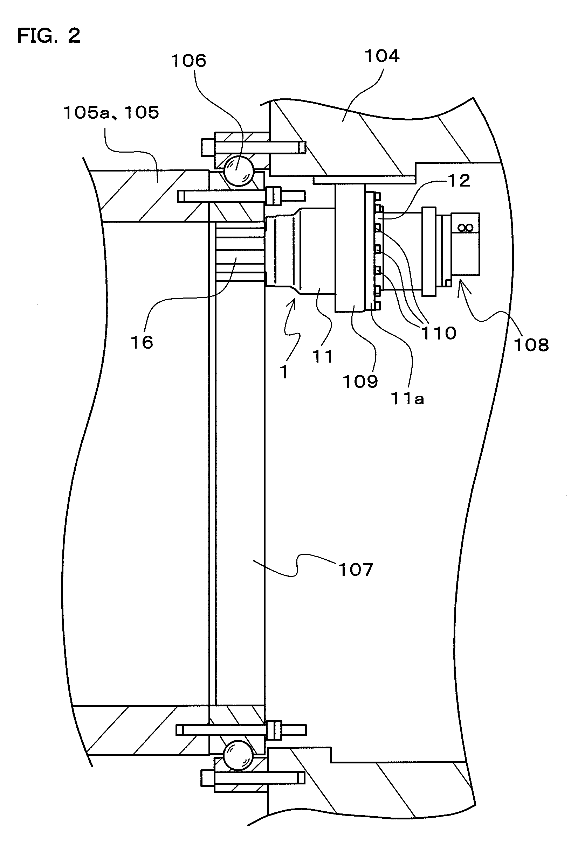

FIG. 2 is a cross-sectional view showing, in an enlarged scale, a portion where a blade 105 is attached to the hub 104, together with the pitch driving apparatus 1. The hub 104 has openings formed in portions to which the blades 105 are attached, and the blades 105 are disposed so as to face those openings at the ends of their shaft portions 105a. Each blade 105 is supported at its shaft portion 105a on the hub 104 via a bearing 106, and is rotatably provided on the hub 104. A ring gear 107 having internal teeth disposed on its inner circumferential side is provided at the end of the shaft portion 105a on the side attached to the hub 104 (in FIG. 2, the internal teeth of the ring gear 107 are not shown). The ring gear 107 is disposed such that its shaft center coincides with the shaft center of the shaft portion 105a, and configured so as to mesh with a pinion 16 provided in an output shaft 15 of the pitch driving apparatus 1, which will be discussed later.

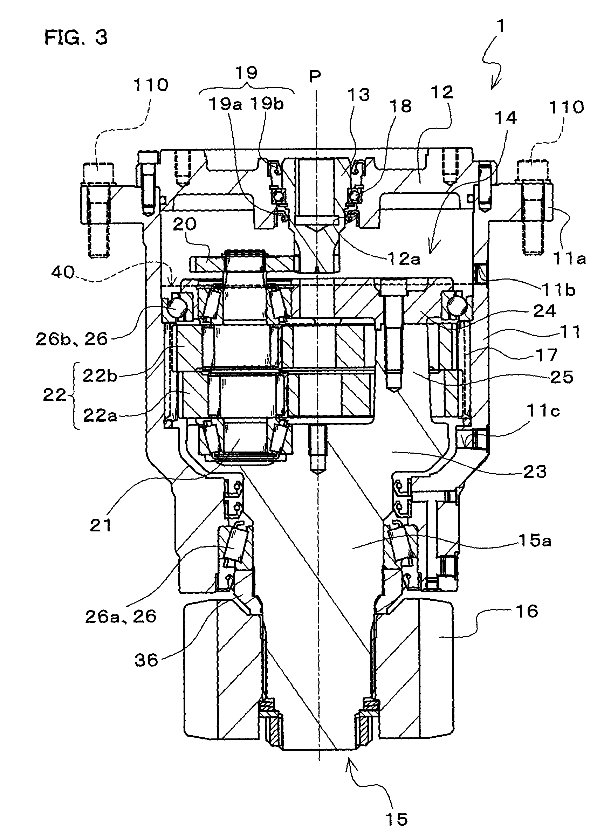

FIG. 3 is a cross-sectional view of the pitch driving apparatus 1. The pitch driving apparatus 1 includes, a casing 11, a cover 12, an input shaft 13, a speed reduction portion 14, an output shaft 15, and so forth. The pitch driving apparatus 1 is coupled to an electric motor 108 as shown in FIG. 2. The pitch driving apparatus 1 is attached via an attachment bracket 109 to the inside of an opening portion of the hub 104 to which a blade 105 is attached. Note that the pitch driving apparatus 1 is attached via multiple attachment bolts 110 to the attachment bracket 109 fixed to the hub 104 at a flange portion 11a formed on the casing 11. Also, the pitch driving apparatus 1 is disposed such that its axial direction, that is, the direction of an axis P of the output shaft 15 (the rotational center line of the pitch driving apparatus 1) indicated by the alternate long and short dashed line in FIG. 3, is parallel to the direction of the shaft center of the shaft portion 105a of the blade 105. As the pitch driving apparatus 1 is provided like this in the windmill, when the hub 104 rotates once, the pitch driving apparatus 1 rotates once around the shaft center of the hub 104 together with the blade 105, and accordingly the angle formed by the axis P of the output shaft 15 (hereinafter, simply referred to as the "axis P") relative to the vertical direction rotates through 360 degrees.

Furthermore, the pitch driving apparatus 1 is disposed such that the pinion 16 of the output shaft 15 disposed on one end side of the pitch driving apparatus 1 meshes with the ring gear 107 of the blade 105. The pitch driving apparatus 1 reduces the speed of the driving force input from the motor 108 disposed on the other end side of the pitch driving apparatus 1 and outputs the driving force to the pinion 16, thereby causing the blade 105 to rotate about its shaft center with respect to the hub 104, together with the ring gear 107 that meshes with the pinion 16. The pitch driving apparatus 1 is thereby configured to control the pitch angle of the blade 105. Note that in the following description, the output side of the pitch driving apparatus 1, on which the output shaft 15 is disposed, is referred to as "one end side", and the input side thereof, to which the motor 108 is attached, is referred to as "the other end side".

As shown in FIGS. 2 and 3, the casing 11 is formed in a cylindrical shape that is open on the one end side and on the other end side, and the aforementioned flange portion 11a for attachment to the attachment bracket 109 is formed on the other end side. Internal tooth pins 17 of the speed reduction portion 14, which will be discussed later, are disposed on the inner circumference of the casing 11. The casing 11 also has formed therein, for example, an oil supply port 11b for supplying lubricating oil to be enclosed in the casing 11 in the case of exchanging the lubricating oil in the casing 11, and an oil drain port 11c for draining the lubricating oil enclosed in the casing 11.

As shown in FIGS. 2 and 3, the cover 12 is provided as a disc-like member that is fixed with multiple bolts and pins to the casing 11 so as to cover the opening of the casing 11 on the other end side. The motor 108 is attached to the cover 12 on the other end side opposite the side attached to the casing 11. The cover 12 further has a through hole 12a formed in its central portion and through which the input shaft 13 discussed below extends.

As shown in FIG. 3, the input shaft 13 is provided as a short shaft member that extends through the through hole 12a of the cover 12 and receives the driving force of the motor 108, and is disposed on the axis P.
Note that in the pitch driving apparatus 1, the input shaft 13, the speed reduction portion 14 disposed in the casing 11, and the output shaft 15 are disposed in series along the axis P. The input shaft 13 is coupled to an output shaft of the motor 108, not shown, on the other end side and has a gear portion formed on its outer circumference on the one end side. The input shaft 13 is rotatably held via a bearing 18 with respect to the through hole 12a of the casing 12.

As shown in FIG. 3, the pitch driving apparatus 1 is further provided with a seal member 19 disposed between the cover 12 and the input shaft 13. The seal member 19 includes a seal member 19a disposed on the one end side with respect to the bearing 18, and a seal member 19b disposed on the other end side with respect to the bearing 18. Both of the seal members (19a and 19b) are disposed on the inner side of the through hole 12a, and this seal member 19 provides sealing against leakage of the lubricating oil enclosed in the casing 11 and the cover 12 to the outside.

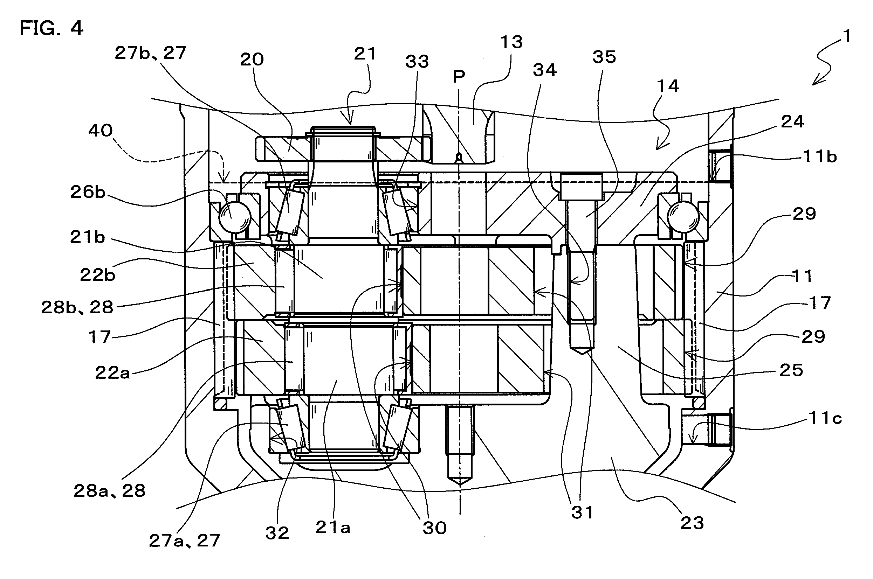

FIG. 4 is a cross-sectional view showing, in an enlarged scale, the speed reduction portion 14 and its vicinity shown in FIG. 3. As shown in FIGS. 3 and 4, the speed reduction portion 14 includes, the internal tooth pins 17, spur gears 20, crankshafts 21, external tooth gears 22, a base carrier 23, an end carrier 24, struts 25, main bearings 26, crankshaft bearings 27, external tooth bearings 28, and so forth.

Multiple internal tooth pins 17 are disposed on the inner circumference of the casing 11 in a state in which they are fitted in and attached to pin grooves formed on the inner circumference of the casing 11. The internal tooth pins 17 (FIGS. 3 and 4 show their external shape, instead of the cross section) are formed as pin-like members (round bar-shaped members) and disposed such that their longitudinal direction is parallel to the axis P. The internal tooth pins 17 are circumferentially arranged at equal intervals on the inner circumference of the casing 11, and configured so as to mesh with external teeth 29 of the external tooth gears 22.

The spur gears 20 are disposed such that the direction of their shaft centers is parallel to the axis P, and are fixed to the ends of multiple crankshafts 21 provided on the other end side. The spur gears 20 are disposed so as to mesh with a gear portion of the input shaft 13 formed on the one end side, and constitute a crank driving gear in the present invention, to which the driving force of the input shaft 13 is transmitted.

Multiple (three, for example) crankshafts 21 are circumferentially disposed around the axis P at equal angle intervals, such that their axial direction is parallel to the axis P. Each crankshaft 21 (FIGS. 3 and 4 show its external shape, instead of the cross section) is configured such that a spur gear 20 is fixed to its end on the other end side as described above and the driving force is input from the input shaft 13. The crankshafts 21 extend through respective crank holes 30 formed in the external tooth gears 22, and are provided as shaft members that rotate with the driving force transmitted from the input shaft 13 and thereby let the external tooth gear 22 rotate eccentrically. The crankshafts 21 also move in an orbital manner along with the rotation of the external tooth gear 22 accompanied by their rotation (rotation on their own axis). Each crankshaft 21 has a first eccentric portion 21a and a second eccentric portion 21b formed in series in its middle portion. The first eccentric portion 21a and the second eccentric portion 21b are formed such that their cross section perpendicular to the axial direction is circular in shape, and provided such that their centers are eccentric with respect to the rotational center line of the crankshaft 21.

The crankshaft bearings 27 are provided as a pair of crankshaft bearings 27, one of which rotatably holds a crankshaft 21 on the one end side and the other of which rotatably holds the crankshaft 21 on the other end side. Each pair of crankshaft bearings 27 is composed of a crankshaft bearing 27a that rotatably holds a crankshaft 21 on the one end side with respect to the base carrier 23, which will be discussed later, and a crankshaft bearing 27b that rotatably holds the crankshaft 21 on the other end side with respect to the end carrier 24, which will be discussed later. In the present embodiment, both of the crankshaft bearings 27a and 27b are configured as tapered roller bearings.

The external tooth gears 22 include a first external tooth gear 22a and a second external tooth gear 22b that are housed in the casing 11 in parallel arrangement. As mentioned above, the first external tooth gear 22a and the second external tooth gear 22b have the crank holes 30 formed as circular holes, through which the crankshafts 21 extend. Each external tooth gear (22a, 22b) of the external tooth gears 22 further has formed therein, in addition to the crank holes 30, strut holes 31 through which the struts 25 discussed later extend. Note that the first external tooth gear 22a and the second external tooth gear 22b are disposed such that the positions of their crank holes 30 correspond to each other and the positions of their strut holes 31 correspond to each other, in the direction parallel to the axis P. Corresponding to the struts 25, multiple (three, for example) strut holes 31 are disposed circumferentially of the external tooth gears 22 at equal angle intervals. The strut holes 31 and the crank holes 30 are alternately formed circumferentially of the external tooth gears 22. Note that the struts 25 extend through the strut holes 31 in a loosely fitted state without contact.

The external teeth 29 for meshing with the internal tooth pins 17 are provided on the outer circumference of each of the first external tooth gear 22a and the second external tooth gear 22b. The external teeth 29 of the first external tooth gear 22a and the external teeth 29 of the second external tooth gear 22b are provided such that their numbers are at least one smaller than the number of the internal tooth pins 17. Accordingly, with this configuration, the meshing of the external teeth 29 of the external tooth gears 22 (the first external tooth gear 22a and the second external tooth gear 22b) with the internal tooth pins 17 is shifted each time the crankshafts 21 rotate, and thereby the external tooth gears 22 (the first external tooth gear 22a and the second external tooth gear 22b) oscillate and rotate eccentrically.

The external tooth bearings 28 include an external tooth bearing 28a disposed in the crank hole 30 of the first external tooth gear 22a, and an external tooth bearing 28b disposed in the crank hole 30 of the second external tooth gear 22b. Both of the external tooth bearings 28 (28a and 28b) are configured as cylindrical roller bearings or needle roller bearings. In each crank hole 30, the external tooth bearing 28a rotatably holds the first eccentric portion 21a of the crankshaft 21 with respect to the first external tooth gear 22a, and the external tooth bearing 28b rotatably holds the second eccentric portion 21b of the crankshaft 21 with respect to the second external tooth gear 22b.

The base carrier 23 is integrally formed at its one end with a body shaft portion 15a of the output shaft 15 and disposed in the casing 11. Meanwhile, crank holding holes 32 are formed on the other end side with respect to the base carrier 23. With the crank holding holes 32, the base carrier 23 rotatably holds the end of each crankshaft 21 on the one end side via the crankshaft bearings 27a. The crank holding holes 32 are circumferentially formed around the axis P at equal angle intervals.

The end carrier 24 is coupled to the base carrier 23 via the struts 25 and provided as a disc-shaped member. The end carrier 24 has crank holding holes 33 formed as through holes and provided circumferentially around the axis P at equal angle intervals. With the crank holding holes 33, the end carrier 24 rotatably holds the crankshafts 21 on the other end side via the crankshaft bearings 27b. Note that the axial position of the crankshaft bearings 27b on the other end side is defined under pressured conditions by a ring-shaped stop member fitted in the crank holding holes 33.

The struts 25 are disposed between the base carrier 23 and the end carrier 24 and provided as pillar-shaped members that provide a connection between the base carrier 23 and the end carrier 24. Multiple (three, for example) struts 25 are circumferentially disposed around the axis P at equal angle intervals, such that their axial direction is parallel to the axis P. Note that the struts 25 and the crankshafts 21 are alternatively disposed circumferentially around the axis P. Each strut 25 is integrally formed with the base carrier 23 and provided so as to project out from the base carrier 23 on the other end side. In each strut 25, a strut bolt hole 34 provided with an internal thread portion formed on its inner circumference is formed, opening on the other end side and facing a through hole for inserting a bolt formed in the end carrier 24. With this configuration, strut bolts 35 are inserted in the strut bolt holes 34 from the other end side with respect to the end carrier 24, and the external thread portions of the strut bolts 35 and the internal thread portions of the strut bolt holes 34 are threadedly engaged with one another, so the end carrier 24 and the base carrier 23 are coupled to each other via the struts 25.

The main bearings 26 are provided as a pair of main bearings 26 that rotatably holds the base carrier 23, the end carrier 24, and the output shaft 15 with respect to the casing 11. The pair of main bearings 26 includes a main bearing 26a that rotatably holds the body shaft portion 15a of the output shaft 15 with respect to the casing 11, and a main bearing 26b that rotatably holds the end carrier 24 with respect to the casing 11. In the present embodiment, the main bearing 26a is configured as a tapered roller bearing, and the main bearing 26b is configured as a ball bearing. Note that the main bearing 26a is engaged on the one end side with a positioning member 36 attached and fixed to the outer circumference of the body shaft portion 15a of the output shaft 15, and is positioned on the other end side under pressured conditions in engagement with a stepped portion of the inner circumference of the casing 11. On the other hand, the main bearing 26b is engaged on the one end side with a stepped portion of the inner circumference of the casing 11, and is positioned on the other end side in engagement with an edge portion of the outer circumference of the end carrier 24. In the pitch driving apparatus 1, the positioning member 36 is fixed to the body shaft portion 15a of the output shaft 15, and the base carrier 23 and the end carrier 24 are fastened with the strut bolts 35 via the struts 25. Accordingly, the output shaft 15, the base carrier 23, and the end carrier 24 hold the casing 11 therebetween via the pair of main bearings 26, and the output shaft 15, the base carrier 23, and the end carrier 24 are rotatably held with respect to the casing 11.

As mentioned above, the output shaft 15 shown in FIG. 3 is integrally formed with the base carrier 23 on the other end side with respect to the body shaft portion 15a and is thereby fixed to the base carrier 23. The pinion 16 is provided on the output shaft 15 by attaching the pinion 16 by spline coupling to the body shaft portion 15a on the one end side that is disposed so as to project out from the casing 11. A seal member is disposed where appropriate between the outer circumference of the body shaft portion 15a and the inner circumference of the casing 11 and provides sealing against leakage of the lubricating oil in the casing 11 to the outside.

In the pitch driving apparatus 1, lubricating oil is enclosed in the casing 11. In FIGS. 3 and 4, the broken line indicates an oil level 40 of the lubricating oil in the casing 11 when the pitch driving apparatus is in a vertical orientation in which the motor 108 is located on the upper side (that is, the one end side of the pitch driving apparatus 1 is the lower side) and the axis P corresponds to the vertical direction. As shown in FIGS. 3 and 4, with the pitch driving apparatus in the aforementioned vertical orientation, lubricating oil is enclosed in the casing 11 such that the oil level 40 of the lubricating oil enclosed in the casing 11 is below the level of the underside of the spur gears 20. Accordingly, with the pitch driving apparatus in the aforementioned vertical orientation, the oil level 40 is below the level of the lower seal member 19a of the seal member 19, such that at least part of a driving force transmission path from the input shaft 13 to the crankshafts 21 (that is, a path along which the driving force is transmitted from the input shaft 13 through the spur gears 20 to the crankshafts 21 on the other end side) is exposed to the air enclosed in the casing 11. With the pitch driving apparatus in this vertical orientation, the oil level 40 of the lubricating oil is near the upper ends of the crankshaft bearings 27b located on the upper side in this condition. Accordingly, with the pitch driving apparatus in the aforementioned vertical orientation, all of the crankshaft bearings (27a and 27b) and the external tooth bearings (28a and 28b) are immersed in the lubricating oil. In this way, in the pitch driving apparatus 1, lubricating oil is enclosed in the casing 11 at least such that the crankshaft bearings (27a and 27b) and the external tooth bearings (28a and 28b) are immersed in the lubricating oil during a single rotation of the hub 104. Note that although the meshing portion of the input shaft 13 and the spur gears 20 is exposed to the air with the pitch driving apparatus in the aforementioned vertical orientation, this meshing portion of the input shaft 13 and the spur gears 20 is immersed in the lubricating oil in a state in which the motor 108 is located on the lower side and the axis P corresponds to the vertical direction. Accordingly, in the pitch driving apparatus 1, all the meshing portions of the gear mechanisms and all the bearings in the casing 11 are immersed in the lubricating oil during a single rotation of the hub 104, and therefore lubrication is ensured.

Next is a description of the operation of the above-described pitch driving apparatus 1 for controlling the pitch angle of the blade 105. The pitch driving apparatus 1 is actuated with the operation of the motor 108. When the operation of the motor 108 is started, the input shaft 13 rotates together with the output shaft of the motor 108 (not shown) and the spur gears 20 that mesh with the gear portion of the input shaft 13 rotate. When the spur gears 20 rotate, the crankshafts 21 fixed to the spur gears 20 rotate together with their first and second eccentric portions (21a and 21b). Accordingly, a load is applied from the first and second eccentric portions (21a and 21b) respectively to the first and second external tooth gears (22a and 22b), and the first and second external tooth gears (22a and 22b) oscillate and rotate eccentrically while shifting their meshing with the internal tooth pins 17. With the eccentric rotation of the first and second external tooth gears (22a and 22b), the crankshafts 21, which are rotatably held against the first and second external tooth gears (22a and 22b), orbits the axis P while rotating on their own axes. This orbital movement of the crankshafts 21 causes the output shaft 15 to rotate together with the base carrier 23 and the end carrier 24, which are coupled to each other via the struts 25 and rotatably hold the crankshafts 21 via the crankshaft bearings (27a and 27b), and therefore a high torque is output from the pinion 16. Accordingly, the ring gear 107 is driven by the pinion 16, and the pitch angle of the blade 105 is controlled.

Furthermore, as mentioned above, when the hub 104 rotates once, the pitch driving apparatus 1 rotates once around the shaft center of the hub 104 together with the blade 105, so the angle formed by the axis P of the pitch driving apparatus 1 relative to the vertical direction rotates through 360 degrees. While the hub 104 rotates once in this way, in the pitch driving apparatus 1, the lubricating oil in the casing 11 is supplied to all the meshing portions of the gear mechanisms and all the bearings in the casing 11.

According to the pitch driving apparatus 1 described above, the pitch driving apparatus 1 is configured as an eccentric speed reducer provided with the external tooth gears 22, which rotate eccentrically. Accordingly, a high speed reduction ratio is ensured and improved output torque is achieved. The pitch driving apparatus 1, which is configured as an eccentric speed reducer, is capable of achieving a high speed reduction ratio with a small configuration. Furthermore, in the pitch driving apparatus 1, lubrication of the bearings in the casing 11 is ensured, because the lubricating oil is enclosed in the casing 11 such that the crankshaft bearings (27a and 27b) and the external tooth bearings (28a and 28b) are immersed in the lubricating oil during a single rotation of the hub 104 of the windmill 101. With the pitch driving apparatus
1 in a vertical orientation in which the motor 108 is located on the upper side and the axis P of the output shaft 15 is oriented in the vertical direction, the oil level 40 of the lubricating oil in the casing 11 is below the level of the seal member 19a disposed between the cover 12 and the input shaft 13 and such that at least part of the driving force transmission path is exposed to the air in the casing 11. Accordingly, with effective use of the properties of the pitch driving apparatus 1, the amount of the lubricating oil in the casing 11 can be reduced while ensuring lubrication of the bearings in the casing, and as a result, the weight of the pitch driving apparatus 1 can be reduced. Furthermore, since the oil level 40 of the lubricating oil is below the level of the seal member 19a with the pitch driving apparatus 1 in the aforementioned vertical orientation, the cover 12 does not need to partly bulge outward greatly as in the speed reducer disclosed in PTL 1, and accordingly an increase in the axial dimension, which is a disadvantage to downsizing, can be suppressed.

It is thus possible according to the present embodiment to provide a windmill pitch driving apparatus 1 that is capable of achieving improved output torque and reduced size as well as reduced weight.

Furthermore, the pitch driving apparatus 1 is configured such that, in its aforementioned vertical orientation, the oil level 40 of the lubricating oil in the casing 11 is below the level of the underside of the spur gears 20. Accordingly, with the pitch driving apparatus 1 in the aforementioned vertical orientation, there is a sufficient volume of stored air above the spur gears 20. This suppresses an increase in pressure in the pitch driving apparatus 1 and suppresses leakage of the lubricating oil in the casing 11 to the outside. Furthermore, it is possible with this configuration to readily achieve a configuration in which a sufficient volume of stored air is ensured, and therefore the axial distance between the spur gears 20 and the cover 12 can be further shortened. This allows a further reduction in the axial dimension of the pitch driving apparatus 1 (that is, the axis of the pitch driving apparatus 1 can be shortened).

Although the above has been a description of the embodiment of the present invention, the present invention is not intended to be limited to the above-described embodiment, and various modifications may be made within the scope recited in the claims. For example, the windmill pitch driving apparatus may be provided with a centercrank speed reduction portion in which the crankshafts are disposed on the axis of the output shaft. The struts, which provide a connection between the base carrier and the end carrier, may be formed separately from the base carrier. The numbers of crankshafts and the numbers of struts may be different from the example of the present embodiment. The type of each bearing may be changed where appropriate for carrying out the present invention. The position of the oil level of the lubricating oil in the casing in a state in which the motor is located on the upper side and the axis of the output shaft corresponds to the vertical direction may be different from the example of the present embodiment, and it may be below or above the level illustrated in the present embodiment. The crank driving gear is not necessarily a spur gear. Furthermore, a configuration is possible in which the driving force is directly input from the input shaft to the crankshafts, or in which the driving force is transmitted via multiple gear components between the input shaft and the crankshafts.

### Industrial Applicability

The present invention is widely applicable as a windmill pitch driving apparatus that can be provided in a windmill and used as a driving apparatus for controlling the pitch angle of a blade that is rotatably provided on the main shaft portion of the windmill.

### Descriptions of Reference Numerals

- 1: Windmill pitch driving apparatus
- 11: Casing
- 12: Cover
- 13: Input shaft
- 15: Output shaft
- 16: Pinion
- 17: Internal tooth pin
- 19, 19a, 19b: Seal member
- 21: Crankshaft
- 22, 22a, 22b: External tooth gear
- 23: Base carrier
- 24: End carrier
- 25: Strut
- 27, 27a, 27b: Crankshaft bearing
- 28, 28a, 28b: External tooth bearing
- 29: External tooth
- 30: Crank hole
- 101: Windmill
- 104: Hub (main shaft portion)
- 105: Blade
- 108: Motor

## Claims

1. A windmill pitch driving apparatus, which can be provided in a windmill and used as a driving apparatus for controlling a pitch angle of a blade that is rotatably provided on a main shaft portion of the windmill, comprising:
a casing;
a cover fixed to the casing so as to cover an opening at an end of the casing, an electric motor being attachable to the cover;
a plurality of internal tooth pins disposed on an inner circumference of the casing and formed as pin-shaped members;
an external tooth gear housed in the casing and provided with external teeth formed on its outer circumference that mesh with the internal tooth pins;
an input shaft extending through the cover and configured to receive a driving force of the motor;
a seal member disposed between the cover and the input shaft;
a crankshaft extending through a crank hole formed in the external tooth gear, and configured to rotate with the driving force transmitted from the input shaft so as to let the external tooth gear rotate eccentrically;
a base carrier holding the crankshaft on one end side;
an end carrier holding the crankshaft on the other end side;
a strut disposed between the base carrier and the end carrier so as to provide a connection between the base carrier and the end carrier;
an output shaft fixed to the base carrier and provided with a pinion;
a pair of crankshaft bearings, one of which rotatably holds the crankshaft on the one end side with respect to the base carrier and the other of which rotatably holds the crankshaft on the other end side with respect to the end carrier; and
an external tooth bearing disposed in the crank hole and rotatably holding the crankshaft with respect to the external tooth gear,
wherein lubricating oil is enclosed in the casing such that the crankshaft bearings and the external tooth bearing are immersed in the lubricating oil during a single rotation of the main shaft portion, and
in a state in which the motor is located on the upper side and an axis of the output shaft corresponds to a vertical direction, an oil level of the lubricating oil enclosed in the casing is below the level of the seal member and such that at least part of a driving force transmission path from the input shaft to the crankshaft is exposed to air enclosed in the casing.

2. The windmill pitch driving apparatus according to claim 1, further comprising:
a crank driving gear fixed to the crankshaft on the other end side and configured to receive the driving force transmitted from the input shaft,
wherein the lubricating oil is enclosed in the casing such that in a state in which the motor is located on the upper side and the axis of the output shaft corresponds to the vertical direction, the oil level of the lubricating oil enclosed in the casing is below the level of the underside of the crank driving gear.
